# EUROPÄISCHE PATENTSCHRIFT

(11) **EP 0 594 690 B1**
(45) Veröffentlichungstag und Bekanntmachung des Hinweises auf die Patenterteilung: **16.10.1996**
(21) Anmeldenummer: 92914876.5
(22) Anmeldetag: 09.07.1992
(51) Int. Cl.: B23Q 11/00

(54) **EINRICHTUNG ZUM ÜBERLASTSCHUTZ UND ABBREMSEN EINES DURCH EINEN MOTOR ANGETRIEBENEN MASCHINENTEILS**
DEVICE FOR PROTECTING A MOTOR-DRIVEN MACHINE PART FROM OVERLOAD AND FOR BRAKING THE PART
DISPOSITIF POUR LA PROTECTION CONTRE LES SURCHARGES ET POUR LE FREINAGE D'UNE PIECE DE MACHINE ENTRAINEE PAR UN MOTEUR

(30) Priorität: 17.07.1991 DE 4123681
(43) Veröffentlichungstag der Anmeldung: 04.05.1994
(73) Patentinhaber: MICRON TECHNOLOGY, INC., Boise, ID 83706-9698 (US)
(72) Erfinder: HINTERLECHNER, Gerhard, D-7530 Pforzheim (DE)
(74) Vertreter: Twelmeier, Ulrich, Dipl.Phys.
(86) Internationale Anmeldenummer: EP9201544
(87) Internationale Veröffentlichungsnummer: WO9301912

(56) Entgegenhaltungen:
- EP-A- 0 205 989

## Beschreibung

Die Erfindung geht aus von einer Bremseinrichtung mit den im Oberbegriff des Anspruchs 1 angegebenen Merkmalen.

Ein Problem bei schnellaufenden Stanz- und Biegemaschinen besteht darin, bei Auftreten einer übermäßigen Belastung des Werkzeugs Schaden am Werkzeug möglichst zu vermeiden oder zu begrenzen. Dazu ist es bekannt, eine Überlastkupplung einzusetzen, die bei Überschreiten einer vorgegebenen Belastung (Drehmoment) den Antriebsstrang vom Motor zum Werkzeug auftrennt oder wie im Falle einer Rutschkupplung das durch die Antriebswelle übertragene Drehmoment begrenzt. Durch den Schwung, den die der Überlastkupplung nachgeordneten Massen haben, bewegen sie sich weiter, wenn die Überlastkupplung anspricht, selbst wenn sie die ihr nachgeordneten Massen im Antriebsstrang vom Motor völlig freischaltet. Es verbleibt deshalb die Aufgabe, die sich weiterbewegenden Massen möglichst rasch abzubremsen, ehe sie größeren Schaden anrichten können. Ordnet man eine Bremse zwischen dem Motor und der Überlastkupplung an, dann kann durch eine solche Bremse zwar der Motor, nicht aber der von der Überlastkupplung freigeschaltete Abschnitt des Antriebstranges bis hin zum Werkzeug abgebremst und stillgesetzt werden. Ordnet man die Bremse hingegen nach der Überlastkupplung an, dann kann man mit ihrer Hilfe das Werkzeug bis zum Stillstand abbremsen und Schaden vermeiden, vorausgesetzt, die Bremse ist schnell genug. Leider sind die Massen, die im Antriebsstrang nach der Überlastkupplung abzubremsen sind (Werkzeuge und Getriebe) im allgemeinen größer als die Massen, die in dem vor der Überlastkupplung liegenden Abschnitt des Antriebstranges liegen. Eine im Antriebsstrang nach der Überlastkupplung liegende Bremse muss deshalb entsprechend kräftig ausgelegt sein, was für die Bremszeit ungünstig ist. Die Bremszeit setzt sich aus einer für die Bauart der jeweiligen Bremse charakteristischen Erregungszeit und aus der reinen Abbremszeit zur Vernichtung der Bewegungsenergie zusammen. Pneumatische und hydraulische Bremsen benötigen zur Durchsteuerung von Ventilen und zum Aufbau des erforderlichen Drucks in der Bremseinrichtung längere Erregungszeiten als elektromagnetische Bremsen, können jedoch große Bremsmomente aufbringen. Für elektromagnetische Bremsen sind Schnellansteuergeräte bekannt, die eine minimale Erregungszeit der Bremsspule ermöglichen, aber eine längere Abbremszeit haben. Eine kurze Bremszeit ist von Bedeutung bei Stanz- und Biegemaschinen, insbesondere bei Maschinen zum Trimmen und Formen der Beinchen von integrierten Schaltkreisen (ICs) in denen das Werkzeug über ein Kurvengetriebe angetrieben wird, die Vor- und Zurückbewegung des Werkzeugs also durch eine Rolle bestimmt wird, die auf der Kurvenfläche einer sich drehenden Kurvenscheibe abrollt. Eine Umdrehung der Kurvenscheibe entspricht dabei einem Arbeitszyklus der Maschine, in welchem das Werkstück positioniert, die Position überwacht, das Werkzeug zur Bearbeitung des Werkstücks vorgeschoben (Arbeitshub) und wieder zurückgeholt (Leerhub) und das Werkstück weiterbefördert oder entfernt wird. Erfahrungsgemäss benötigt man für die Steuerung der Werkzeugbewegung etwa eine halbe Umdrehung der Kurvenscheibe. Für den Werkstücktransport, die Werkstückpositionierung, die Kontrollmessung, ob die Werkstückposition stimmt und für ein eventuelles Stillsetzen der Maschine, falls die Werkstückposition fehlerhaft ist, steht deshalb ungefähr nur eine halbe Umdrehung der Kurvenscheibe zur Verfügung. Eine Verlängerung oder Verkürzung des Bremswinkels geht deshalb mit einem Faktor bis zu 2 in die Zykluszeit der Maschine ein, d.h., eine Verlängerung der Bremszeit bewirkt eine erhebliche Verlängerung der Zykluszeit. Um zu schnellaufenden Maschinen zu gelangen, kommt es deshalb entscheidend darauf an, das Werkzeug notfalls sehr rasch stillsetzen zu können, um eine Zerstörung des Werkzeugs bei falsch positioniertem Werkstück verhindern zu können.

Bislang hat man sich bemüht, diesen Problemen dadurch beizukommen, dass man die Wirksamkeit der zwischen der Überlastkupplung und der zu schützenden Stelle (Werkzeug) angeordneten Bremse gesteigert und ihre Ansprechzeit verringert sowie die Bremse möglichst nahe an der zu schützenden Stelle am Ende des Antriebsstrangs angeordnet hat, um eine Verringerung des maximal auftretenden Moments, welches durch die freigeschaltete Massenträgheit hervorgerufen wird, zu erreichen. Dem sind jedoch Grenzen gesetzt, zumal dazu hohe Bremsmomente erforderlich sind, welche wieder größere Bremseinheiten mit großer Massenträgheit der Bremseinrichtung selbst zur Folge haben.

Der Erfindung liegt die Aufgabe zugrunde, eine Einrichtung zum Abbremsen eines motorisch angetriebenen Maschinenteils anzugeben, mit welcher ein besonders rasches Stillsetzen des angetriebenen Maschinenteils möglich ist, und weiters das im Überlastfall maximal auftretende Moment und damit die maximale Belastungsspitze an den Werkzeugen zu begrenzen.

Diese Aufgabe wird gelöst durch eine Einrichtung mit den im Anspruch 1 angegebenen Merkmalen. Vorteilhafte Weiterbildungen der Erfindung sind Gegenstand der Unteransprüche.

Erfindungsgemäss ist im Antriebsstrang zwischen dem Motor und dem angetriebenen Maschinenteil in Kombination eine Bremse, eine Überlastkupplung und ein Freilauf vorgesehen, der beim Antreiben des Maschinenteils frei läuft, aber beim Bremsen des angetriebenen Maschinenteils sperrt. Dabei liegt die Bremse im Antriebsstrang vor der Überlastkupplung und der Freilauf überbrückt die Überlastkupplung.

Wird die Bremse willkürlich ausgelöst oder durch einen Sensor, der beispielsweise meldet, dass ein Werkstück, auf welches das angetriebene Maschinenteil (Werkzeug) einwirken soll, nicht richtig positioniert ist, dann wirkt zunächst der Schwung aller bewegten Massen auf die Bremse und es wird durch den Bremsvorgang sehr rasch die Drehmomentschwelle erreicht, bei welcher die Überlastkupplung anspricht. Ab diesem Zeitpunkt muß die Bremse für eine kurze Zeitspanne bis zum Sperren des Freilaufs die hinter der Überlastkupplung befindlichen Massen nicht abbremsen, sondern nur eine relativ kleine Masse, so dass die Bremse sehr rasch zum Stillstand kommt. Das Ansprechen der Überlastkupplung führt jedoch nicht dazu, dass sich das freigeschaltete Maschinenteil ungehindert weiterbewegen kann, denn nun kommt automatisch der Freilauf zur Wirkung, welcher nach Durchlaufen seines Klemmwinkels, der klein sein sollte, sperrt und den restlichen Schwung des angetriebenen, jetzt abzubremsenden Maschinenteils (Werkzeug) auffängt und in die Bremse einleitet, die, weil sie inzwischen steht, die Energie praktisch schlagartig vernichtet; das Haltemoment der Bremse ist so groß, dass die Antriebswelle nicht erneut in Bewegung gesetzt wird. Dabei ist die Sperrichtung des Freilaufs gleich der Antriebsrichtung.

Wenn es nicht zu einer willkürlichen Auslösung der Bremse kommt, sondern im Antriebsstrang eine übermässige Belastung auftritt, bei welcher die Drehmomentschwelle der Überlastkupplung überschritten wird, dann spricht diese an; das kann erfindungsgemäss dazu verwendet werden, um die Bremseinrichtung auszulösen. Die Bremseinrichtung kann die Antriebswelle sehr rasch stillsetzen, da der Freilauf zunächst nicht sperrt und deshalb zunächst nicht der Schwung der bewegten Massen hinter den Freilauf, sondern nur der Schwung der bewegten Massen vor dem Freilauf aufgefangen und gebremst werden muss. Die Bremse darf deshalb relativ klein sein, mit kleiner Bremswicklung, und das ist zusätzlich günstig für eine kurze Bremszeit. Die von der Bremse in dieser Phase zu bremsende Masse ist besonders klein, wenn zwischen der Bremse und dem Motor zum Abkoppeln des Motors eine weitere Kupplung vorgesehen ist, denn dann muss die Bremse beim Ansprechen der Überlastkupplung nicht auch die Schwungmasse des Motors abbremsen. Vorzugsweise ist diese weitere Kupplung in Gestalt einer Kupplungsbremsenkombination vorhanden, also als Baueinheit aus Kupplung und Bremse, denn das erlaubt durch kompakte Bauweise minimal zu bremsende Massen. Weil die von der Bremse zu bremsende Masse klein ist, kommt sie rasch zum Stillstand. Sehr rasch kommt es dann auch zur Klemmung des Freilaufes. Der sperrende Freilauf fängt wie ein Prellbock den restlichen Schwung der Massen im Antriebsstrang hinter der Überlastkupplung (Werkzeugseite) auf und leitet die Energie in die bereits stehende Bremse ein, deren Haltemoment so groß ist, dass sich die Antriebswelle nicht wieder in Bewegung setzt.

Die erfindungsgemässe Bremseinrichtung eignet sich besonders für schnellaufende Stanz- und Biegemaschinen, vor allem solche, deren Werkzeuge mechanisch durch Kurvengetriebe angetrieben werden und in denen die bewegten Massen und die zu ihrem Stillsetzen benötigten Bremsmomente nicht zu groß sind.

Wenn zwischen dem Abtriebsteil der Überlastkupplung und dem zu bremsenden Maschinenteil bzw. einem dazwischenliegenden Kurvengetriebe noch ein Untersetzungsgetriebe vorgesehen ist, dann hat das den Vorteil, dass der zum Stillstand des Maschinenteils führende Klemmwinkel des Freilaufes durch die Untersetzung des Untersetzungsgetriebes auf der Seite des Maschinenteils entsprechend verkleinert wird, was zu einem sehr kleinen Bremswinkel der Kurvenscheibe führt. Ausserdem wird die zu bremsende Massenträgheit des Kurvengetriebes zur Überlastkupplung und Bremse im Quadrat der Untersetzung reduziert Aus demselben Grund kann in vorteilhafter Weiterbildung der Erfindung auch zwischen der Überlastkupplung und der Bremse ein Getriebe vorgesehen sein.

Um im Überlastfall beim Ansprechen der Überlastkupplung den Bremsvorgang auszulösen, ist vorzugsweise ein Sensor vorgesehen, der die Relativlage der beiden Hälften der Überlastkupplung überwacht und ein Bremssignal an die Bremseinrichtung abgibt, sobald der Beginn der der Relativbewegung der Überlastkupplungshälften beobachtet wird. Dadurch kann die Überlast, ohne wesentliche Erhöhung des Moments über das eingestellte Ansprechmoment der Überlastkupplung hinaus, nahezu unverzögert erkannt und eine Schnellbremsung eingeleitet werden.

Als Sensor eignet sich vor allem eine Lichtschranke, mit welcher sich schon Lageänderungen beobachten lassen, welche nur Bruchteile eines Millimeters betragen.

Es ist aber auch möglich, zum Auslösen des Bremsvorganges im Überlastfall einen Drehmomentsensor zu verwenden, der irgendwo im Antriebsstrang liegt, oder einen Kraftsensor am angetriebenen Maschinenteil.

Als Bremse kann eine elektromagnetische Bremse verwendet werden, deren Elektromagnet kurzzeitig ein hoher Strom zugeführt wird, wenn die Bremse ausgelöst wird. Bei Verwendung einer Bremskupplungskombination wird auch der Antriebsmotor abgekuppelt. Der Motor muss dann nicht abgebremst werden.

Eine vorteilhafte Alternative besteht darin, als Motor zum Antreiben des Maschinenteils, welches ggfs. abgebremst werden soll, einen Servomotor zu verwenden, der direkt gesteuert und dadurch auch rasch angehalten werden kann; ein solcher Servomotor kann nicht nur die Antriebsaufgabe, sondern auch die Bremsaufgabe übernehmen, so dass eine gesonderte Bremse entbehrlich ist. Eine solche Einrichtung ist Gegenstand des Anspruchs 2.

Als Überlastkupplung eignet sich vor allem eine bei Überschreiten einer Drehmomentschwelle ausrastende Formschlußkupplung, welche ein gegenüber der Antriebswelle unverdrehbares Teil (Antriebsteil) und ein auf der Antriebswelle drehbar angeordnetes, ausrastendes Teil (Abtriebsteil) hat. Eine solche Formschlußkupplung rastet bei einer vorgegebenen Drehmomentschwelle aus und schaltet die im Antriebsstrang nach der Formschlußkupplung vorhandene Restenergie frei, welche in der zuvor beschriebenen Weise durch den sperrenden Freilauf aufgefangen und in die zwischenzeitlich zum Stillstand gekommene Bremse eingeleitet wird. Eine solche Formschlußkupplung spricht sehr rasch an. Ihre Ansprechschwelle wird üblicherweise durch die Spannung einer Feder bestimmt, mit der die beiden Kupplungshälften gegeneinander gedrückt werden. Vorzugsweise wird in der Formschlußkupplung eine Feder mit degressiver Kennlinie verwendet. Dadurch fällt das Drehmoment, welches durch die Kupplung übertragen werden kann, mit Beginn des Ansprechens ab bis auf ein sehr kleines Restmoment. Die Verwendung einer Feder mit degressiver Kennlinie trägt zu einem raschen Ansprechen der Formschlußkupplung bei.

Rutschkupplungen, die als Überlastkupplungen gebräuchlich sind, sind weniger gut geeignet, da sie langsamer ansprechen und danach ein höheres Restmoment übertragen.

In einem Freilauf hat man üblicherweise zwei relativ zueinander bewegliche Ringflächen, zwischen denen Klemmkörper angeordnet sind, die in einer Drehrichtung Freilauf ermöglichen und bei Umkehr der Drehrichtung klemmen. Eine dieser Ringflächen könnte unmittelbar auf der Antriebswelle ausgebildet sein, vorzugsweise befinden sich die Ringflächen auf zwei Ringen, von denen der eine starr mit der Antriebswelle und der andere starr mit dem Abtriebsteil der Überlastkupplung verbunden ist. Die Sperrichtung des Freilaufs ist gleich der Antriebsrichtung.

In den beigefügten schematischen Zeichnungen ist ein Ausführungsbeispiel der Erfindung dargestellt.
- Figur 1: zeigt eine Ansicht einer Antriebseinheit einer Maschine,
- Figur 2: zeigt eine Seitenansicht einer Kurvenscheibe der in Figur 1 dargestellten Antriebseinheit,
- Figur 3: zeigt als Detail eine Formschlußkupplung in Kombination mit einer Freilaufkupplung als Bestandteil der in Figur 1 dargestellten Antriebseinheit teilweise im Schnitt,
- Figur 4: zeigt ein Detail der Formschlußkupplung aus Figur 3 in ausgerasteter Stellung,
- Figur 5: zeigt den Querschnitt V-V gemäss Figur 3 durch die Freilaufkupplung,
- Figur 6: zeigt eine Drehmoment-Zeit-Kennlinie bei willkürlich ausgelöstem Bremsvorgang, und
- Figur 7: zeigt eine Drehmoment-Zeit-Kennlinie im Fall von Überlast.

In der Antriebseinheit sind auf einer gemeinsamen Antriebswelle 1 hintereinander ein Elektromotor 2, eine Baueinheit 3 aus einer elektromagnetischen Bremse und einer Kupplung zum Abkoppeln des Motors 2, als Überlastkupplung eine bei Überschreiten einer Drehmomentschwelle ausrastende Formschlußkupplung 4, ein Zahnrad 5 und ein Freilauf 6 (eine Einwegkupplung mit Klemmgesperre) angeordnet. Das treibende Zahnrad 5 treibt mittels eines Zahnriemens 7 ein weiteres Zahnrad 8, welches auf einer angetriebenen Welle 9 sitzt, die in einem Getriebegehäuse 10 gelagert ist und im Getriebegehäuse mehrere Kurvenscheiben 11 trägt.

Die Formschlußkupplung 4 hat ein Antriebsteil 4a, bestehend aus einer Nabe 12 und einem Flansch 13, und ist axial unverschiebbar und verdrehfest mit der Welle 1 verbunden. Die Formschlußkupplung 4 hat ferner ein Abtriebsteil 4b, welches axial verschiebbar die Nabe 12 umgibt und gegenüber dieser verdrehbar ist. Zu diesem Zweck stecken in dem Abtriebsteil 4b mehrere achsparallele Bolzen 14, welche sich in Bohrungen 15 eines Lagerringes 15 hinein erstrecken, welcher mit Rollen 16 auf der Nabe 12 drehbar gelagert ist. Der Lagerring 15 ist verdrehfest mit dem Zahnrad 5 und dieses seinerseits verdrehfest mit dem Aussenring 6a des Freilaufs verbunden, während der Innenring 6b des Freilaufs durch einen Keil 17 verdrehfest mit der Antriebswelle 1 verbunden ist. Zwischen dem Aussenring 6a und dem Innenring 6b sind im Freilauf Klemmkörper 18 vorgesehen und so angeordnet, dass der Freilauf bei angetriebenem Zahnrad 5 freiläuft, bei gebremster Welle 1 und ausgerasteter Formschlußkupplung 4 aber sperrt.

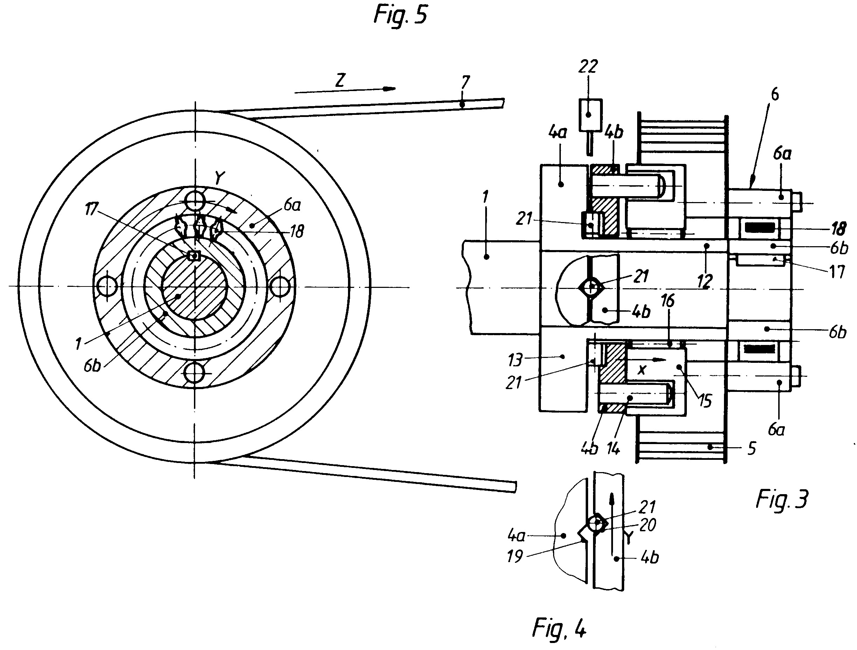

In den einander zugewandten Oberflächen des Antriebsteils 4a und des Abtriebsteils 4b der Formschlußkupplung sind einander paarweise gegenüberliegende Kerben 19 und 20 vorgesehen, welche radial verlaufen und zur Aufnahme von Rollen 21 dienen, die das Antriebsteil und Abtriebsteil in einem geringen Abstand voneinander halten. Durch nicht dargestellte Federn, welche zwischen dem Abtriebsteil 4b und dem Lagerring 15 wirken, wird das Abtriebsteil 4b dauernd gegen das Antriebsteil 4a gedrückt. Die Federkraft, der Durchmesser der Rollen 21 und die Form der Kerben 19 und 20 bestimmen eine Drehmomentschwelle, bei deren Überschreiten das Antriebsteil 4a und das Abtriebsteil 4b beginnen, sich gegeneinander zu verdrehen, wobei sich das Abtriebsteil 4b vom Antriebsteil 4a entfernt und die Bolzen 15 sich tiefer in den Lagerring 15 hineinbewegen (siehe auch Figur 3 u. 4). Um diese Ausrastbewegung der Formschlußkupplung beobachten zu können, ist ein Sensor 22, insbesondere eine Lichtschranke o.ä., vorgesehen, der empfindlich auf die Relativbewegung des Abtriebsteils 4b gegenüber dem Antriebsteil 4a anspricht und daraufhin über eine sehr schnelle elektrische Verbindung ein Signal an die Bremse 3 übermittelt, das diese auslöst.

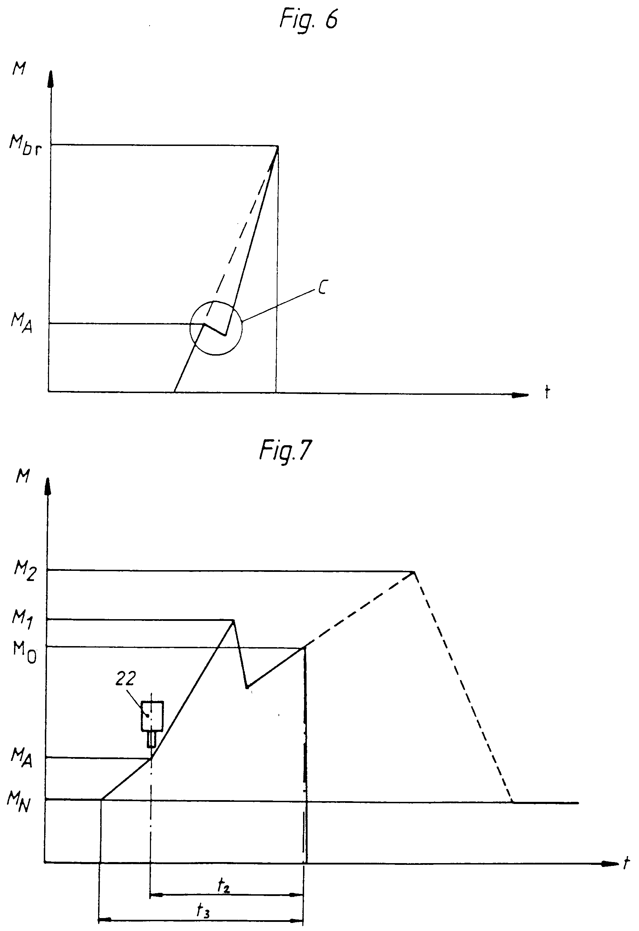

Bei ordnungsgemäss laufender Maschine treibt der Motor 2 die Antriebswelle 1 und mit dieser das Antriebsteil 4a der Formschlußkupplung, welche eingerastet ist und das Zahnrad 5 mitnimmt. Wird nun, ohne dass in der Antriebseinheit eine Überlast auftritt, die Bremskupplungskombination 3 ausgelöst, sei es willkürlich, sei es durch einen Sensor, der feststellt, dass ein Werkstück im Arbeitsbereich eines angetriebenen Werkzeugs nicht richtig positioniert ist, dann wird bei abgekoppeltem Motor 2 zunächst die Antriebswelle 1 samt allen mit ihr noch verbundenen Massen von der Formschlußkupplung 4 über das Getriebe 9, 11 bis hin zum Werkzeug abgebremst, auch das Antriebsteil 4a der Formschlußkupplung und der Innenring 6b der Freilaufkupplung 6. Das Drehmoment an der Bremse 3 und an der Formschlußkupplung 4 steigt steil an, bis die Drehmomentschwelle M_{A} erreicht wird, bei welcher die Formschlußkupplung 4 ausrastet (siehe Figur 6). Während der Ausrastbewegung erfolgt vorübergehend ein Abfall des Drehmoments an der Bremse 3 (Bereich C in Figur 6), weil die Massen im Antriebsstrang nach der Formschlußkupplung 4 von der Bremse 3 abgekoppelt werden, und die Antriebswelle 1 kommt zum Stillstand. Bei der Ausrastbewegung bewegen sich die Rollen 21 aus den Kerben 19, wobei sich das Abtriebsteil 4b gegenüber dem Antriebsteil 4a verdreht (Bewegungsrichtung Y gemäss Figur 4). Gleichzeitig beginnt die Klemmbewegung des Freilaufs 6, weil jetzt nicht mehr die Antriebswelle 1 das Abtriebsteil 4b und den Innenring 6b treibt, sondern zum Stehen kommt und nun das Zahnrad 8 und die Kurvenwelle 9 über den Zahnriemen 7 und das Zahnrad 5 mit ihrem Schwung den Aussenring 6a des Freilaufs 6 treiben, bis der Freilauf sperrt, den Schwung schlagartig abbremst und das dadurch auftretende Bremsmoment aufnimmt, welches nun steil bis auf einen Endwert M_{br} ansteigt und damit die Drehbewegung des Zahnrads 5 und die Bewegung der danach angetriebenen Maschinenteile rasch stoppt, weil der Freilauf 6 durch die zwischenzeitlich zum Stillstand gekommene Bremse 3 gehalten wird.

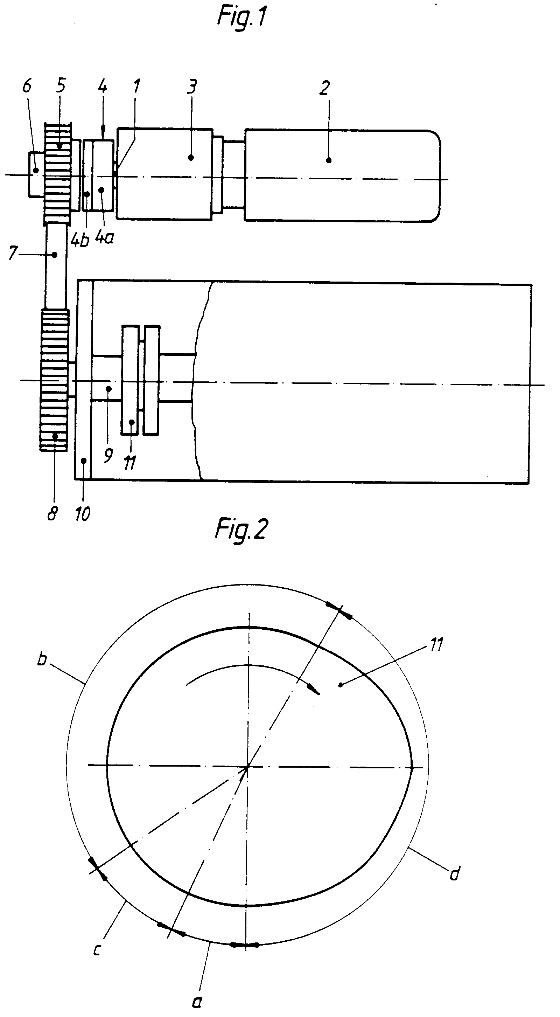

Die Einstellung der Formschlußkupplung nach den erforderlichen Antriebsmomenten der angetriebenen Maschinenteile (Werkzeuge) hat keinen Einfluß auf das Ausrastverhalten der Formschlußkupplung und den maximalen Klemmwinkel des Freilaufes. Der ohnehin schon kleine Klemmwinkel des Freilaufes 6 wird entsprechend dem Untersetzungsverhältnis des Zahnriemengetriebes nochmals verkleinert. Man erhält im Ergebnis einen sehr kleinen Bremswinkel (a) an der Kurvenscheibe 11 (siehe Figur 2). Da nahezu die Hälfte des Umfangswinkels der Kurvenscheibe für die Werkzeugbewegung (Abschnitt d), ein ungefähr gleich großer Umfangsabschnitt für das Vorschieben oder Einlegen des Werkstücks benötigt wird, verbleiben nur noch ein verhältnismässig kleiner Umfangsabschnitt (c) für das Fixieren des Werkstücks und für Kontrollmessungen seiner Position und ebenfalls ein nur sehr kleiner Umfangsabschnitt (a) für den Bremsvorgang, der bei einer festgestellten Fehlpositionierung ausgelöst werden muss. Da eine Verlängerung der Bremszeit ungefähr mit dem Faktor 2 in die Zykluszeit (Zeit für eine Umdrehung der Kurvenscheibe 11) eingeht, ist es vorteilhaft, dass durch Anwendung der Erfindung der für das Bremsen benötigte Umfangsabschnitt (a) sehr klein gehalten werden kann.

Wenn an dem angetriebenen Maschinenteil, z.B. in einem durch die Kurvenscheiben 11 angetriebenen Werkzeug, welches ggfs. abzubremsen ist, eine Überlastung auftritt, dann bleibt der Freilauf 6 in der Freilaufrichtung zunächst nach hinten entsperrt und die Formschlußkupplung 4 kann ohne Behinderung entgegen der Antriebsrichtung Z ausrasten, wobei die Ausrastbewegung bei der Drehmomentschwelle M_{A} (Figur 7) einsetzt. Ein dabei entstehendes Drehmomentmaximum M₁ wird von der Formschlußkupplung 4 freigeschaltet, die Ausrastbewegung der Formschlußkupplung 4 ist mit Erreichen des Drehmomentmaximums M₁ beendet. Weil die Formschlußkupplung weit hinten im Antriebsstrang direkt nach der Bremse 3 angeordnet ist, ist M₁ relativ klein, so dass die Schadensstelle im Werkzeug entsprechend wenig belastet wird. Die Bremseinrichtung 3 befindet sich an der Stelle des kleinsten reduzierten Massenträgheitsmomentes.

Durch das Ausrasten der Formschlußkupplung 4 werden die auf die Formschlußkupplung folgenden Getriebeglieder 5, 7, 8, 9, 11 frei und deren Bewegungsenergie muss noch aufgefangen und abgebaut werden. Zu diesem Zweck ist der Sensor 22 vorgesehen, der schon zu Beginn des Ausrastvorganges beim Abheben des Abtriebsteils 4b die Bremskupplungskombination 3 auslöst. Beim Ausrasten der Formschlußkupplung muss die Bremseinrichtung nur sehr geringe Massenträgheitsmomente abbremsen, nämlich jene der Antriebswelle 1, des Antriebsteils 4a der Formschlußkupplung und des Innenrings 6b des Freilaufes. Die restlichen Massenträgheitsmomente der Zahnriemenübertragung 5, 7, 8 und des Kurvengetriebes 9, 11, welche im Antriebsstrang nach dem Aussenring 6a des Freilaufs kommen, werden geringfügig verzögert, bei schon abgebremster Antriebswelle 1 vom Freilauf 6 aufgenommen, sobald dieser sperrt. Es kommt deshalb innerhalb einer extrem kurzen Bremszeit t2 nach dem Ansprechen des Sensors 22 zur Abbremsung der Antriebswelle 1 und danach durch Sperren des Freilaufes 6 zum Stillsetzen des Werkzeugs, wodurch das Drehmomentmaximum M₂ , welches infolge der Rotationsenergie der auf den Freilauf 6 folgenden Getriebeglieder ohne das Greifen der Bremseinrichtung entstehen und zu einem Schaden im Werkzeug führen würde, auf ein unkritisches Maximum M₀ begrenzt und seine Einwirkungszeit t3 auf die Schadensstelle im Werkzeug verkürzt werden kann. Nach der Zeit t3 ist das Werkzeug zum Stillstand gekommen.

Zwischen der Baueinheit 3 aus Kupplung und Bremse und der Formschlußkupplung 4 kann ein Getriebe vorgesehen sein, welches die zu bremsende Massenträgheit mit dem Quadrat der Getriebeuntersetzung reduziert, allerdings unter Inkaufnahme einer höheren Motordrehzahl.

## Patentansprüche

1. Einrichtung zum Überlastschutz und zum Abbremsen eines angetriebenen Maschinenteils, insbesondere eines über ein Kurvengetriebe (9-11) angetriebenen Werkzeugs in einer Stanz- und/oder Biegemaschine,
mit einer von einem Motor (2) angetriebenen Antriebswelle (1), auf welcher eine Überlastkupplung (4) angeordnet ist,
**dadurch gekennzeichnet**, dass eine Bremseinrichtung (3) vorgesehen ist, welche vor der Überlastkupplung (4) auf die Antriebswelle (1) einwirkt, und dass ein die Überlastkupplung (4) überbrückender Freilauf (6) vorgesehen ist, der beim Bremsen der Antriebswelle (1) sperrt.

2. Einrichtung nach Anspruch 1, **dadurch gekennzeichnet**, dass der Motor ein elektrischer Servomotor ist, der auch die Aufgabe der Bremseinrichtung erfüllt.

3. Einrichtung nach Anspruch 1 oder 2, **dadurch gekennzeichnet**, dass zum Auslösen der Bremse (3) ein Sensor (22) vorgesehen ist, welcher auf eine in dem vom Motor (2) zum angetriebenen Maschinenteil führenden Antriebsstrang auftretende Überlast anspricht.

4. Einrichtung nach Anspruch 3, **dadurch gekennzeichnet**, dass die Überlastkupplung (4) ein Antriebsteil (4a) und ein Abtriebsteil (4b) hat und dass der Sensor (22) auf eine Relativbewegung von An- und Abtriebsteil (4a; 4b) der Überlastkupplung (4) anspricht.

5. Einrichtung nach einem der vorstehenden Ansprüche, **dadurch gekennzeichnet**, dass zwischen dem Abtriebsteil (4b) und dem angetriebenen und im Überlastfall zu bremsenden Maschinenteil ein Untersetzungsgetriebe vorgesehen ist.

6. Einrichtung nach Anspruch 1, **dadurch gekennzeichnet**, dass eine Kupplungsbremsenkombination zwischen dem Motor (2) und der Überlastkupplung (4) angeordnet ist.

7. Einrichtung nach einem der vorstehenden Ansprüche, **dadurch gekennzeichnet**, dass ein Getriebe zwischen der Überlastkupplung (4) und der Bremseinrichtung (3) angeordnet ist.

8. Einrichtung nach einem der vorstehenden Ansprüche, **dadurch gekennzeichnet**, dass die Überlastkupplung (4) eine bei Überschreiten einer Drehmomentschwelle ausrastende Formschlußkupplung ist, welche ein gegenüber der Antriebswelle (1) unverdrehbares Teil (Antriebsteil 4a) und ein auf der Antriebswelle (1) drehbar angeordnetes, ausrastendes Teil (Abtriebsteil 4b) hat.

9. Einrichtung nach Anspruch 8, **dadurch gekennzeichnet**, dass das Antriebsteil (4a) und das Abtriebsteil (4b) der Überlastkupplung (4) durch eine Feder mit degressiver Kennlinie gegeneinander verspannt sind.

10. Einrichtung nach einem der vorstehenden Ansprüche, **dadurch gekennzeichnet**, dass der Freilauf (6) einen drehfest mit der Antriebswelle (1) verbundenen ersten Ring (6b) und einen drehfest mit dem Abtriebsteil (4b) der Formschlußkupplung (4) verbundenen zweiten Ring (6a) verbindet.

11. Einrichtung nach einem der vorstehenden Ansprüche, **dadurch gekennzeichnet**, dass zum Auslösen der Bremseinrichtung (3) ein ggfs. weiterer Sensor vorgesehen ist, welcher auf eine Störung im Bereich des angetriebenen Maschinenteils, insbesondere auf eine fehlerhafte Lage eines zu bearbeitenden Werkstückes, anspricht.

12. Einrichtung nach einem der vorstehenden Ansprüche, **dadurch gekennzeichnet**, dass die Bremseinrichtung (3) im Antriebsstrang an der Stelle des kleinsten reduzierten Massenträgheitsmomentes angeordnet ist.

## Claims

1. A device for overload protection and for braking a driven machine part, in particular a tool driven by way of a cam gear (9-11) in a punching and/or bending machine,
having a drive shaft (1) which is driven by a motor (2) and on which there is arranged an overload clutch (4),
characterized in that a braking device (3) is provided which acts on the drive shaft (1) upstream of the overload clutch (4), and in that a freewheel (6) is provided which bridges the overload clutch (4) and blocks when the drive shaft (1) is braked.

2. A device according to Claim 1, characterized in that the motor is an electric servomotor which also fulfils the function of the braking device.

3. A device according to Claim 1 or 2, characterized in that for triggering the brake (3) a sensor (22) is provided which responds to an overload occurring in the drive train leading from the motor (2) to the driven machine part.

4. A device according to Claim 3, characterized in that the overload clutch (4) has a drive part (4a) and an output part (4b), and in that the sensor (22) responds to a relative movement between the drive part and the output part (4a; 4b) of the overload clutch (4).

5. A device according to one of the preceding claims, characterized in that between the output part (4b) and the driven machine part to be braked in the event of overload there is provided a step-down gear.

6. A device according to Claim 1, characterized in that a clutch/brake combination is arranged between the motor (2) and the overload clutch (4).

7. A device according to one of the preceding claims, characterized in that a gear is arranged between the overload clutch (4) and the braking device (3).

8. A device according to one of the preceding claims, characterized in that the overload clutch (4) is a form-fitting clutch which disengages in the event of a torque threshold being exceeded and which has a part (drive part 4a) which is non-rotational with respect to the drive shaft (1) and a disengaging part (output part 4b) arranged rotatably on the drive shaft (1).

9. A device according to Claim 8, characterized in that the drive part (4a) and the output art (4b) of the overload clutch (4) are tensioned with respect to one another by a spring having a digressive characteristic.

10. A device according to one of the preceding claims, characterized in that the freewheel (6) connects a first ring (6b) connected torsionally rigidly to the drive shaft (1) and a second ring (6a) connected torsionally rigidly to the output part (4b) of the form-fitting clutch (4).

11. A device according to one of the preceding claims, characterized in that to trigger the braking device (3) a possibly further sensor is provided which responds to a disruption in the region of the driven machine part, in particular to an incorrect position of a workpiece to be machined.

12. A device according to one of the preceding claims, characterized in that the braking device (3) is arranged in the drive train in the area of least reduced mass inertia.

## Revendications

1. Dispositif pour la protection contre les surcharges et pour le freinage d'une pièce de machine entraînée par un moteur, en particulier d'un outil entraîné par une commande à cames (9-11) dans une machine à découper et/ou une machine à cintrer,
avec un arbre de transmission (1) entraîné par un moteur (2), sur lequel est disposé un embrayage de surcharge (4),
caractérisé en ce qu'un dispositif de freinage (3) est prévu, lequel agit avant l'embrayage de surcharge (4) sur l'arbre de transmission (1), et en ce qu'une roue libre (6) superposant l'embrayage de surcharge (4) est prévue, laquelle bloque l'arbre de transmission (1) lors du freinage.

2. Dispositif selon la revendication 1, caractérisé en ce que le moteur est un servomoteur électrique, qui remplit également la fonction de dispositif de freinage.

3. Dispositif selon la revendication 1 ou 2, caractérisé en ce que le déblocage du frein (3) est assuré par un palpeur (22), lequel réagit à une surcharge apparaissant dans la ligne d'entraînement conduisant du moteur (2) vers la pièce de la machine entraînée par le moteur.

4. Dispositif selon la revendication 3, caractérisé en ce que l'embrayage de surcharge (4) est muni d'une pièce de commande (4a) et d'une pièce réceptrice (4b) et en ce que le palpeur (22) réagit à un mouvement relatif de la pièce de commande et de la pièce réceptrice (4a ; 4b) de l'embrayage de surcharge (4).

5. Dispositif selon l'une quelconque des revendications précédentes, caractérisé en ce qu'un démultiplicateur est monté entre la pièce réceptrice (4b) et la pièce de la machine entraînée par le moteur et à freiner en cas de surcharge.

6. Dispositif selon la revendication 1, caractérisé en ce qu'un système combiné d'embrayage et de frein est monté entre le moteur (2) et l'embrayage de surcharge (4).

7. Dispositif selon l'une quelconque des revendications précédentes, caractérisé en ce qu'un engrenage est monté entre l'embrayage de surcharge (4) et le dispositif de freinage (3).

8. Dispositif selon l'une quelconque des revendications précédentes, caractérisé en ce que l'embrayage de surcharge (4) est un clabot qui se désengrène en cas de dépassement d'un seuil de couple moteur, lequel est muni d'une pièce fixe (pièce de commande 4a) face à l'arbre de transmission (1) et d'une pièce (pièce réceptrice 4b) qui se désengrène, disposée de manière mobile sur l'arbre de transmission (1).

9. Dispositif selon la revendication 8, caractérisé en ce que la pièce de commande (4a) et la pièce réceptrice (4b) de l'embrayage de surcharge (4) sont tendus l'une par rapport à l'autre par un ressort à ligne caractéristique dégressive.

10. Dispositif selon l'une quelconque des revendications précédentes, caractérisé en ce que la roue libre (6) relie une première bague (6b) reliée de manière fixe à l'arbre de transmission (1) et une deuxième bague (6a) reliée de manière fixe à la pièce réceptrice (4b) du clabot (4).

11. Dispositif selon l'une quelconque des revendications précédentes, caractérisé en ce que le déblocage du dispositif de freinage (3) est assuré, le cas échéant, par un autre palpeur, lequel réagit à une perturbation enregistrée dans la zone de la pièce de la machine entraînée par le moteur, en particulier lors d'une mauvaise position de la pièce à usiner.

12. Dispositif selon l'une quelconque des revendications précédentes, caractérisé en ce que le dispositif de freinage (3) est monté dans la ligne d'entraînement au point du plus petit moment d'inertie de masse réduit.
